# EUROPEAN PATENT APPLICATION

(11) **EP 4 440 101 A1**
(43) Date of publication of application: **02.10.2024**
(21) Application number: 22924157.5
(22) Date of filing: 20.12.2022
(51) Int. Cl.: H04N 7/18, G05B 19/418, G06Q 50/04

(54) **INFORMATION PROCESSING SYSTEM**

(30) Priority: 27.01.2022 JP 2022010958
(71) Applicant: OMRON Corporation, Kyoto 600-8530 (JP)
(72) Inventor: KUNISHIGE, Yusuke, Muko-shi, Kyoto 617-0002 (JP); SHIMODA, Katsuhiro, Muko-shi, Kyoto 617-0002 (JP)
(74) Representative: Isarpatent
(86) International application number: PCT/JP2022/046909
(87) International publication number: WO 2023/145308

(57) **Abstract**

To reduce the time required for investigating the cause and performing recovery work when a problem occurs. An information processing system includes: a signal output unit configured to output an external signal; an imaging unit configured to acquire the external signal from the signal output unit and synchronously output a captured image generated by imaging an object and the external signal; and a creation unit configured to acquire the captured image and the external signal from the imaging unit, add information regarding the external signal to the captured image synchronized with the external signal, and create a moving image including a plurality of the captured images continuous in time series on the basis of the captured image to which the information regarding the external signal has been added.

## Description

### TECHNICAL FIELD

The present invention relates to an information processing system.

### BACKGROUND ART

At a manufacturing site, equipment stoppage directly leads to loss, and hence, early investigation of the cause and early recovery from the stoppage are required. However, since the timing at which equipment stoppage occurs is unknown, a camera may be used to monitor equipment constantly, but constant monitoring is not very realistic in terms of resources (time and storage capacity).

A technique is known to facilitate confirmation of an event by combining data from the event detected by a camera with a video feed captured by another (cf. Patent Document 1). In addition, a factory drive recorder has been developed as a tool to assist verification at a manufacturing site. Compared to a typical drive recorder, the factory drive recorder can record at higher resolution and frame rate, and can perform spot recording when a change occurs or with an input from an external signal as a trigger. The factory drive recorder can be retrofitted with a camera and other equipment, making it possible to monitor a problem that is difficult to anticipate during the design phase of the manufacturing line. The factory drive recorder is thus suitable for verification at the manufacturing site.

### PRIOR ART DOCUMENT

### PATENT DOCUMENT

Patent Document 1: Japanese Unexamined Patent Publication No. 2018-98778

### SUMMARY OF THE INVENTION

### PROBLEMS TO BE SOLVED BY THE INVENTION

The factory drive recorder can record a video of the manufacturing site by triggering a signal from an external sensor connected to the camera, thus enabling an operator to grasp a work status when a problem occurs by checking the video. However, if the status of equipment at the manufacturing site is unknown even though the video was checked, it takes time to investigate the cause and perform recovery work when the problem occurs.

The present invention has been made in view of the above circumstances, and an object of the present invention is to provide a technique capable of reducing the time required for investigating the cause and performing recovery work when a problem occurs.

### MEANS FOR SOLVING THE PROBLEM

An information processing system according to one aspect of the present invention is an information processing system including: a signal output unit configured to output an external signal; an imaging unit configured to acquire the external signal from the signal output unit and synchronously output a captured image generated by imaging an object and the external signal; and a creation unit configured to acquire the captured image and the external signal from the imaging unit, add information regarding the external signal to the captured image synchronized with the external signal, and create a moving image including a plurality of the captured images continuous in time series on the basis of the captured image to which the information regarding the external signal has been added.

A user can grasp the state of the external signal output from the signal output device by viewing the moving image and checking the information regarding the external signal added to the captured image. Since the captured image and the external signal are synchronized with each other, the user can grasp the timing at which the state of the external signal output from the signal output device changes. This makes it possible to reduce the time required for investigating the cause and performing recovery work when a problem occurs.

In the present invention, the signal output unit may one of a plurality of the signal output units, the imaging unit may acquire the external signal from each of the plurality of signal output units and output the captured image and a plurality of the external signals in synchronization with each other, and the creation unit may acquire the captured image and the plurality of external signals from the imaging unit, add information regarding the plurality of external signals to the captured image synchronized with the plurality of external signals, and create a moving image including a plurality of the captured images continuous in time series on the basis of the captured image to which the information regarding the plurality of external signals has been added. The user can grasp the state of the external signal output from each of the plurality of signal output devices by viewing the moving image and checking the information regarding the plurality of external signal added to the captured image.

In the present invention, the signal output unit may be one of a plurality of the signal output units, the imaging unit may be one of a plurality of the imaging units, the plurality of imaging units may each acquire the external signals from the signal output units connected to each of the imaging units, and output the captured image and the external signals in synchronization with each other, and the creation unit may acquire the captured image and the external signals from each of the plurality of imaging units, add information regarding the external signals output from the plurality of signal output units to the captured image synchronized with the external signals output from one of the plurality of signal output units, and create a moving image including a plurality of the captured images continuous in time series on the basis of the captured image to which the information regarding the plurality of external signals has been added. The user can grasp the state of the external signal output from each of the plurality of signal output devices by viewing the moving image and checking the information regarding the plurality of external signal added to the captured image.

In the present invention, the signal output unit may be one of a plurality of the signal output units, the imaging unit may be one of a plurality of the imaging units, the plurality of imaging units may each acquire the external signals from the plurality of signal output units connected to each of the imaging units, and output the captured image and the a plurality of the external signals in synchronization with each other, and the creation unit may acquire the captured image and the plurality of external signals from each of the plurality of imaging units, add information regarding the external signals output from the plurality of signal output units to the captured image synchronized with the external signals output from one of the plurality of signal output units, and create a moving image including a plurality of the captured images continuous in time series on the basis of the captured image to which the information regarding the plurality of external signals has been added. The user can grasp the state of the external signal output from each of the plurality of signal output devices by viewing the moving image and checking the information regarding the plurality of external signal added to the captured image.

In the present invention, the signal output unit may be a sensor or a PLC. In the present invention, at least one of the plurality of signal output units may be a sensor, and at least one of the plurality of signal output units may be a PLC. In the present invention, the information regarding the external signal may include at least one of a letter, a number, a symbol, a character string, a number string, a graph, a time chart, and an icon.

### EFFECT OF THE INVENTION

According to the present invention, it is possible to reduce the time required for investigating the cause and performing recovery work when a problem occurs.

### BRIEF DESCRIPTION OF THE DRAWINGS

[Fig. 1] Fig. 1 is a diagram illustrating a schematic configuration of an information processing system.
[Fig. 2] Fig. 2 is a block diagram schematically illustrating a configuration of an information processing apparatus.
[Fig. 3] Fig. 3 is a flowchart illustrating a flow of the processing of the information processing apparatus.
[Fig. 4] Fig. 4 is a view illustrating an example of a captured image.
[Fig. 5] Fig. 5 is a diagram illustrating an example of information regarding an external signal.
[Fig. 6] Fig. 6 is a view illustrating an example of the captured image.

### MODE FOR CARRYING OUT THE INVENTION

### [Application examples]

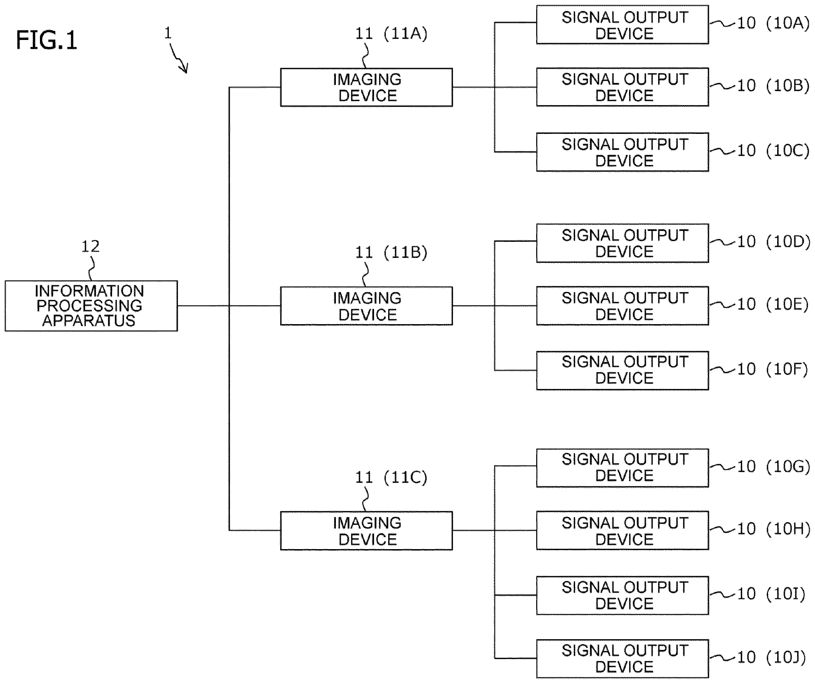

Hereinafter, application examples of the present invention will be described with reference to the drawings. As illustrated in Fig. 1, an information processing system 1 according to the present application example includes a plurality of signal output devices 10 (10A to 10J), a plurality of imaging devices 11 (11A to 11C), and an information processing apparatus 12. The signal output device 10 is an example of a signal output unit. The imaging device 11 is an example of an imaging unit. The information processing system 1 is employed at a manufacturing site, for example. In the configuration example illustrated in Fig. 1, the signal output devices 10A to 10C are connected to the imaging device 11A, the signal output devices 10D to 10F are connected to the imaging device 11B, and the signal output devices 10G to 10J are connected to the imaging device 11C. The imaging devices 11A to 11C are connected to the information processing apparatus 12.

In the configuration example illustrated in Fig. 1, the signal output devices 10A to 10C are connected to the imaging device 11A, but the number of signal output devices 10 connected to the imaging device 11A is not limited to three, and may be one, two, or four or more. In the configuration example illustrated in Fig. 1, the signal output devices 10D to 10F are connected to the imaging device 11B, but the number of signal output devices 10 connected to the imaging device 11B is not limited to three, and may be one, two, or four or more. In the configuration example illustrated in Fig. 1, the signal output devices 10G to 10J are connected to the imaging device 11C, but the number of signal output devices 10 connected to the imaging device 11C is not limited to four, and may be one, two, three, or five or more. In the configuration example illustrated in Fig. 1, the imaging devices 11A to 11C are connected to the information processing apparatus 12, but the number of the imaging devices 11 connected to the information processing apparatus 12 is not limited to three, and may be one, two, or four or more.

The signal output device 10 is a particle sensor, an image sensor, a flow rate sensor, a pressure sensor, a photoelectric sensor, a proximity sensor, a safety sensor (e.g., safety light curtain), a PLC (programmable logic controller), or the like. The signal output device 10 outputs an external signal. The signal output device 10 may be a sensor that performs sensing for obtaining various information in the surroundings and outputs an external signal according to the sensing result. The signal output device 10 may be a controller that acquires sensing results from various sensors, controls a control target, and outputs an external signal according to the sensing results. The signal output device 10 and the imaging device 11 are connected in a wired or wireless manner. The imaging device 11 acquires the external signal output from the signal output device 10. When the plurality of signal output devices 10 is connected to the imaging device 11, the imaging device 11 acquires external signals output from the plurality of signal output devices 10.

The imaging device 11 is a camera that images an object and generates a captured image. The imaging device 11 may be an industrial camera. The imaging device 11 generates a captured image at a predetermined frame rate. The imaging device 11 synchronously outputs a captured image and the external signal acquired from the signal output device 10. When the plurality of signal output devices 10 are connected to the imaging device 11, the imaging device 11 synchronously outputs a captured image and the plurality of external signals acquired from the plurality of signal output devices 10. The imaging device 11 and the information processing apparatus 12 are connected to each other in a wired or wireless manner. The information processing apparatus 12 acquires the captured image and the external signal output from the imaging device 11. The external signal output from the signal output device 10 is input to the information processing apparatus 12 via the imaging device 11. As a result, the information processing apparatus 12 can easily acquire the external signal and the captured image synchronized with the external signal.

The information processing apparatus 12 may include a computer including, for example, a CPU (processor), a RAM, a nonvolatile storage device (e.g., ROM, flash memory, hard disk, etc.), an I/O interface, and the like. The information processing apparatus 12 may be, for example, a processing device such as a personal computer (PC), an industrial personal computer (IPC), an embedded computer, a smartphone, or a tablet terminal. All or some of the functions provided by the information processing apparatus 12 may include a circuit such as an ASIC or a FPGA. Alternatively, the information processing apparatus 12 may perform predetermined processing in cooperation with another computer using a distributed computing or cloud computing technique.

The information processing apparatus 12 adds information regarding the external signal to the captured image synchronized with the external signal. The information processing apparatus 12 may combine the captured image synchronized with the external signal with the information regarding the external signal. When acquiring a plurality of external signals from the imaging device 11, the information processing apparatus 12 adds information regarding the plurality of external signals to the captured image. The information regarding the external signal may be information indicating the state of the external signal. The information regarding the external signal includes at least one of a letter, a number, a symbol, a character string, a number string, a graph, a time chart, and an icon. The information processing apparatus 12 creates a moving image including a plurality of captured images continuous in time series on the basis of the captured image to which the information regarding the external signal has been added.

The user can grasp the state of the external signal output from the signal output device 10 by viewing the moving image (video) and checking the information regarding the external signal added to the captured image. Since the captured image and the external signal are synchronized with each other, the user can grasp the timing at which the state of the external signal output from the signal output device 10 changes. This makes it possible to reduce the time required for investigating the cause and performing recovery work when a problem occurs.

### <Embodiment>

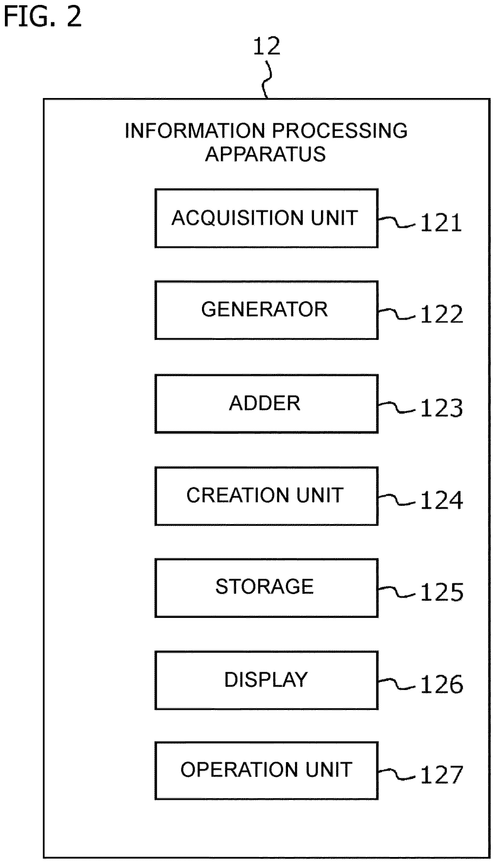

Fig. 2 is a block diagram schematically illustrating the configuration of the information processing apparatus 12. The information processing apparatus 12 includes an acquisition unit 121, a generator 122, an adder 123, a creation unit 124, a storage 125, a display 126, and an operation unit 127. The acquisition unit 121 acquires the external signal and the captured image synchronized with the external signal from the imaging device 11. The generator 122 generates information regarding the external signal on the basis of the external signal. The adder 123 adds the information regarding the external signal to the captured image synchronized with the external signal. The adder 123 may combine the captured image synchronized with the external signal with the information regarding the external signal. The creation unit 124 creates a moving image including a plurality of captured images continuous in time series on the basis of the captured image to which the information regarding the external signal has been added. The storage 125 stores the moving image created by the creation unit 124. The display 126 displays the moving image created by the creation unit 124 or the moving image stored in the storage 125. The operation unit 127 is a controller that instructs the information processing apparatus 12 and operates the information processing apparatus 12.

When the CPU of the information processing apparatus 12 executes a program stored in the storage 125, the acquisition unit 121, the generator 122, the adder 123, and the creation unit 124 perform predetermined processing. At least two of the acquisition unit 121, the generator 122, the adder 123, and the creation unit 124 may be integrated. The storage 125 includes a RAM and a nonvolatile storage device (e.g., ROM, flash memory, hard disk, etc.). The display 126 is, for example, a CRT (cathode ray tube) display, a liquid crystal display, a plasma display, an organic EL (Electro Luminescence) display, or the like. The operation unit 127 may include input devices such as a keyboard, a mouse, operation buttons, and a touch panel. Not all the components of the information processing apparatus 12 illustrated in Fig. 2 are essential, and components of the information processing apparatus 12 may be added or deleted as appropriate.

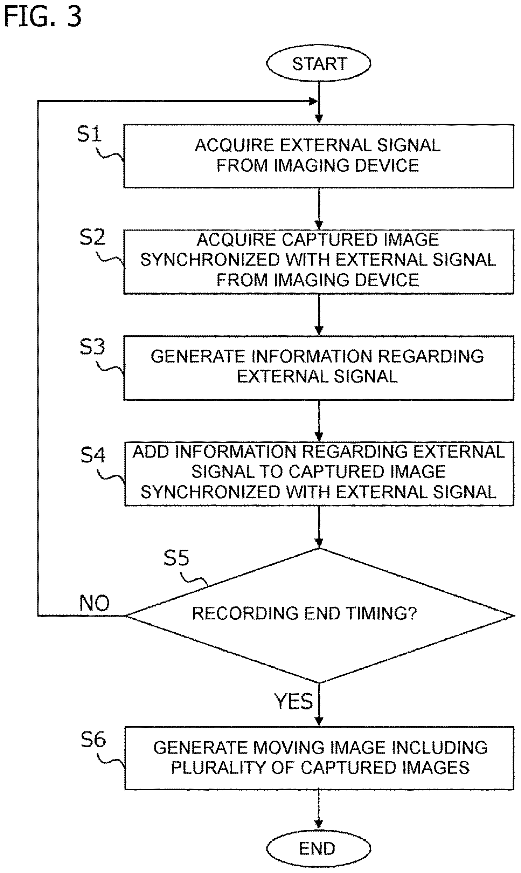

Fig. 3 is a flowchart illustrating a flow of processing of the information processing apparatus 12. The processing illustrated in Fig. 3 is started when the information processing apparatus 12 receives a recording instruction. The recording is a process of creating a moving image including a plurality of captured images continuous in time series. Examples of the recording instruction include a constant recording instruction and a trigger recording instruction. The constant recording is a process of recording in a set time. In the constant recording, for example, a moving image including a plurality of captured images from time A to time B is created. The trigger recording is a process of starting recording when the setting condition is satisfied. In the trigger recording, a moving image that includes a plurality of captured images in a predetermined time (e.g., 5 minutes) before and after the timing at which the setting condition is satisfied is created. In trigger recording, recording may be started when the amount of change between a plurality of captured images continuous in time series becomes equal to or greater than a threshold value. In addition, in the trigger recording, a preset still image and a captured image are compared, and recording may be started when the amount of change becomes equal to or greater than a threshold value.

The information processing apparatus 12 acquires an external signal from the imaging device 11 (S1). The information processing apparatus 12 acquires a captured image synchronized with the external signal from the imaging device 11 (S2). The information processing apparatus 12 generates information regarding the external signal (S3). The information processing apparatus 12 adds the information regarding the external signal to the captured image synchronized with the external signal (S4). The information processing apparatus 12 determines whether or not it is the recording end timing (S5). When it is the recording end timing (S5; YES), the information processing apparatus 12 creates a moving image including a plurality of captured images continuous in time series on the basis of the captured image to which the information regarding the external signal has been added (S6). When it is not the recording end timing (S5; NO), the process returns to S1.

### (Moving Image Creation Example (1))

A description will be given of an example in which the information processing apparatus 12 adds information regarding an external signal output from one signal output device 10 (e.g., signal output device 10A) to a captured image to create a moving image. The imaging device 11A acquires an external signal from the signal output device 10A connected to the imaging device 11A, and synchronously outputs a captured image and the external signal (the external signal output from the signal output device 10A).

The information processing apparatus 12 acquires the captured image and the external signal from the imaging device 11A. The information processing apparatus 12 adds information regarding the external signal to a captured image synchronized with the external signal, and creates a moving image including a plurality of captured images continuous in time series on the basis of the captured image to which the information regarding the external signal has been added. In this case, the moving image includes a plurality of captured images output from the imaging device 11A, and the information regarding the external signal output from the signal output device 10A has been added to the captured images included in the moving image. The user can grasp the state of the external signal output from the signal output device 10A by viewing the moving image and checking the information regarding the external signal added to the captured image. Since the captured image and the external signal are synchronized with each other, the user can grasp the timing at which the state of the external signal output from the signal output device 10A changes. This makes it possible to reduce the time required for investigating the cause and performing recovery work when a problem occurs.

### (Moving Image Creation Example (2))

A description will be given of an example in which the information processing apparatus 12 adds information regarding external signals output from a plurality of signal output devices 10 (e.g., signal output devices 10A to 10C) to a captured image to create a moving image. The imaging device 11A acquires external signals from the signal output devices 10A to 10C connected to the imaging device 11A, and synchronously outputs a captured image and a plurality of external signals (the external signals output from the signal output devices 10A to 10C). The information processing apparatus 12 acquires the captured image and the plurality of external signals from the imaging device 11A.

The information processing apparatus 12 adds information regarding the plurality of external signals to the captured image synchronized with the plurality of external signals, and creates a moving image including a plurality of captured images continuous in time series on the basis of the captured image to which the information regarding the external signal has been added. In this case, the moving image includes a plurality of captured images output from the imaging device 11A, and the information regarding the external signals output from the signal output devices 10A to 10C has been added to the captured images included in the moving image. The user can grasp the state of the external signal output from each of the signal output devices 10A to 10C by viewing the moving image and checking the information regarding the plurality of external signal added to the captured image. This makes it possible to reduce the time required for investigating the cause and performing recovery work when a problem occurs, and to conduct complex analysis.

### (Moving Image Creation Example (3))

A description will be given of an example in which the information processing apparatus 12 adds information regarding external signals output from a plurality of signal output devices 10 (e.g., signal output devices 10A, 10D, 10G) to a captured image to create a moving image. The imaging device 11A acquires an external signal from the signal output device 10A connected to the imaging device 11A, and synchronously outputs a captured image and the external signal (the external signal output from the signal output device 10A). The imaging device 11B acquires an external signal from the signal output device 10D connected to the imaging device 11B, and synchronously outputs a captured image and the external signal (the external signal output from the signal output device 10D). The imaging device 11C acquires an external signal from the signal output device 10G connected to the imaging device 11C, and synchronously outputs a captured image and the external signal (the external signal output from the signal output device 10G).

The information processing apparatus 12 acquires the captured image and the external signal (the external signal output from the signal output device 10A) from the imaging device 11A. The information processing apparatus 12 acquires the captured image and the external signal (the external signal output from the signal output device 10D) from the imaging device 11B. The information processing apparatus 12 acquires the captured image and the external signal (the external signal output from the signal output device 10G) from the imaging device 11C. In this manner, the information processing apparatus 12 acquires the captured images and external signals from the imaging devices 11A to 11C.

The information processing apparatus 12 adds information regarding the external signals output from the signal output devices 10A, 10D, 10G to the captured image synchronized with the external signal output from one of the signal output devices 10A, 10D, 10G. The information processing apparatus 12 creates a moving image including a plurality of captured images continuous in time series on the basis of the captured image to which the information regarding the external signal output from the signal output devices 10A, 10D, 10G has been added. Therefore, the information regarding the external signals output from the signal output devices 10A, 10D, 10G has been added to the captured image included in the moving image.

In the case of adding the information regarding the external signals output from the signal output devices 10A, 10D, 10G to the captured image synchronized with the external signal output from the signal output device 10A, the moving image includes a plurality of captured images output from the imaging device 11A. In the case of adding the information regarding the external signals output from the signal output devices 10A, 10D, 10G to the captured image synchronized with the external signal output from the signal output device 10D, the moving image includes a plurality of captured images output from the imaging device 11B. In the case of adding the information regarding the external signals output from the signal output devices 10A, 10D, 10G to the captured image synchronized with the external signal output from the signal output device 10G, the moving image includes a plurality of captured images output from the imaging device 11C.

The user can grasp the states of the external signals output from the signal output devices 10A, 10D, 10G by viewing the moving image and checking information regarding the plurality of external signals added to the captured image. This makes it possible to reduce the time required for investigating the cause and performing recovery work when a problem occurs, and to conduct complex analysis.

For example, the user can grasp the states of the external signals output from the signal output devices 10A, 10D, 10G by viewing a moving image including a plurality of captured images output from the imaging device 11A. In this manner, by viewing one moving image, the user can grasp the state of the external signal output from the signal output device 10A connected to the imaging device 11A, the state of the external signal output from the signal output device 10D connected to the imaging device 11B, and the state of the external signal output from the signal output device 10G connected to the imaging device 11C.

### (Moving Image Creation Example (4))

A description will be given of an example in which the information processing apparatus 12 adds information regarding external signals output from a plurality of signal output devices 10 (e.g., signal output devices 10A to 10J) to a captured image to create a moving image. The imaging device 11A acquires external signals from the signal output devices 10A to 10C connected to the imaging device 11A, and synchronously outputs a captured image and a plurality of external signals (the external signals output from the signal output devices 10A to 10C). The imaging device 11 B acquires external signals from the signal output devices 10D to 10F connected to the imaging device 11B, and synchronously outputs a captured image and a plurality of external signals (the external signals output from the signal output devices 10D to 10F). The imaging device 11C acquires external signals from the signal output devices 10G to 10J connected to the imaging device 11C, and synchronously outputs a captured image and a plurality of external signals (the external signals output from the signal output devices 10G to 10J).

The information processing apparatus 12 acquires a captured image and the plurality of external signals (the external signals output from the signal output devices 10A to 10C) from the imaging device 11A. The information processing apparatus 12 acquires a captured image and the plurality of external signals (the external signals output from the signal output devices 10D to 10F) from the imaging device 11B. The information processing apparatus 12 acquires a captured image and the plurality of external signals (the external signals output from the signal output devices 10G to 10J) from the imaging device 11C. In this manner, the information processing apparatus 12 acquires the captured image and the plurality of external signals from each of the imaging devices 11A to 11C.

The information processing apparatus 12 adds information regarding the external signals output from the signal output devices 10A to 10J to the captured image synchronized with the external signal output from one of the signal output devices 10A to 10J. The information processing apparatus 12 creates a moving image including a plurality of captured images continuous in time series on the basis of the captured image to which the information regarding the external signal output from the signal output devices 10A to 10J has been added. Therefore, information regarding the external signals output from the signal output devices 10A to 10J has been added to the captured image included in the moving image.

In the case of adding the information regarding the external signals output from the signal output devices 10A to 10J to the captured image synchronized with the external signal output from one of the signal output devices 10A to 10C, the moving image includes a plurality of captured images output from the imaging device 11A. In the case of adding the information regarding the external signals output from the signal output devices 10A to 10J to the captured image synchronized with the external signal output from one of the signal output devices 10D to 10F, the moving image includes a plurality of captured images output from the imaging device 11B. In the case of adding the information regarding the external signals output from the signal output devices 10A to 10J to the captured image synchronized with the external signal output from one of the signal output devices 10G to 10J, the moving image includes a plurality of captured images output from the imaging device 11C.

The user can grasp the states of the external signals output from the signal output devices 10A to 10J by viewing the moving image and checking information regarding the plurality of external signals added to the captured image. This makes it possible to reduce the time required for investigating the cause and performing recovery work when a problem occurs, and to conduct complex analysis.

For example, the user can grasp the states of the external signals output from the signal output devices 10A to 10J by viewing a moving image including a plurality of captured images output from the imaging device 11A. In this manner, by viewing one moving image, the user can grasp the states of the external signals output from the signal output devices 10A to 10C connected to the imaging device 11A, the states of the external signals output from the signal output devices 10D to 10F connected to the imaging device 11B, and the states of the external signals output from the signal output devices 10G to 10J connected to the imaging device 11C.

The imaging devices 11A to 11C may set time information in the captured image. The information processing apparatus 12 may add information regarding the external signals output from the signal output devices 10A to 10J to the captured image synchronized with the external signal output from one of the signal output devices 10A to 10J by using time information set in the captured image. An example of a process of adding information regarding each external signal to a captured image synchronized with the external signal will be described. The information processing apparatus 12 acquires an external signal A1 and a captured image A2 synchronized with the external signal A1 from the imaging device 11A. The information processing apparatus 12 acquires an external signal B1 and a captured image B2 synchronized with the external signal B1 from the imaging device 11B. The information processing apparatus 12 acquires an external signal C1 and a captured image C2 synchronized with the external signal C1 from the imaging device 11C.

The information processing apparatus 12 may add information regarding the external signal A1, information regarding the external signal B1, and information regarding the external signal C1 to the captured image A2 synchronized with the external signal A1 by using the time information set in the captured images A2, B2, C2. The information processing apparatus 12 may add information regarding the external signal A1, information regarding the external signal B1, and information regarding the external signal C1 to the captured image B2 synchronized with the external signal B1 by using the time information set in the captured images A2, B2, C2. The information processing apparatus 12 may add information regarding the external signal A1, information regarding the external signal B1, and information regarding the external signal C1 to the captured image C2 synchronized with the external signal C1 by using the time information set in the captured images A2, B2, C2.

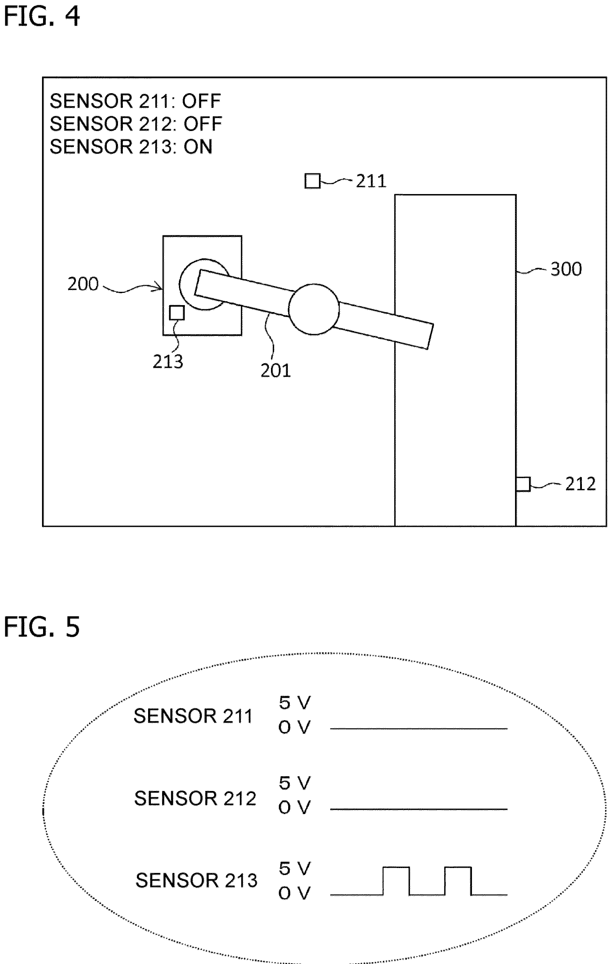

Fig. 4 is a diagram illustrating an example of the captured image. Fig. 4 illustrates a captured image when a robot 200 and a conveyor 300 are imaged. The robot 200 includes a robot arm 201 that performs predetermined work on a workpiece conveyed by the conveyor 300. The workpiece is, for example, a final product, an intermediate product, a semi-product, a part, a material, or the like. Here, the imaging device 11A is performing imaging, and sensors 211 to 213 are connected to the imaging device 11A.

The sensor 211 is a monitoring sensor that monitors the motion of the robot arm 201. When the motion range of the robot arm 201 exceeds a predetermined range, the sensor 211 detects that the motion of the robot arm 201 is abnormal. When the motion range of the robot arm 201 exceeds the predetermined range, the sensor 211 outputs an ON signal as an external signal. When the motion range of the robot arm 201 falls within the predetermined range, the sensor 211 outputs an OFF signal as an external signal.

The sensor 211 may be a current clamp attached to a cable line of an indicating lamp of a monitoring device that monitors the motion of the robot arm 201. When the motion range of the robot arm 201 exceeds the predetermined range, current flows through the indicating lamp, and the indicating lamp is illuminated. When the motion range of the robot arm 201 falls within the predetermined range, no current flows through the indicating lamp, and the indicating lamp is not illuminated. When current flows through the indicating lamp, the sensor 211 outputs an ON signal as an external signal. When no current flows through the indicating lamp, the sensor 211 outputs an OFF signal as an external signal.

The sensor 212 is a sensor that detects an abnormality in the conveyor 300. When the conveyor 300 is abnormal, the sensor 212 outputs an ON signal as an external signal. When the conveyor 300 is normal, the sensor 212 outputs an OFF signal as an external signal. For example, when detecting an abnormal sound from the conveyor 300, the sensor 212 detects that the conveyor 300 is abnormal.

The sensor 212 may be a current clamp attached to a cable line of an indicating lamp of a detection device that detects an abnormality in the conveyor 300. When the conveyor 300 is abnormal, current flows through the indicating lamp, and the indicating lamp is illuminated. When the conveyor 300 is normal, no current flows through the indicating lamp, and the indicating lamp is not illuminated. When current flows through the indicating lamp, the sensor 212 outputs an ON signal as an external signal. When no current flows through the indicating lamp, the sensor 212 outputs an OFF signal as an external signal.

The sensor 213 is a vibration sensor that measures the vibration of the robot arm 201. The sensor 213 is installed near the base of the robot arm 201. When the measured vibration value does not fall within the predetermined range, the sensor 213 outputs an ON signal as an external signal. When the measured vibration value falls within the predetermined range, the sensor 213 outputs the OFF signal as an external signal.

The imaging device 11A acquires the external signals output from the sensors 211 to 213. The imaging device 11A synchronously outputs a captured image and the external signal acquired from the sensors 211 to 213. The information processing apparatus 12 acquires the captured image and the external signals output from the imaging device 11A. The information processing apparatus 12 generates information regarding the external signals, and adds information regarding the external signals to the captured image synchronized with the external signals. In the example of the captured image illustrated in Fig. 4, the information regarding the external signals is superimposed on a predetermined area of the captured image. The captured image to which the information regarding the external signals has been added is displayed on the display 126 of the information processing apparatus 12. Furthermore, the information processing apparatus 12 may transmit the captured image to which the information regarding the external signals has been added to an external display apparatus, and the external display apparatus may display the captured image to which the information regarding the external signal has been added.

In the example of the captured image illustrated in Fig. 4, the information regarding the external signals includes "Sensor 211: OFF", "Sensor 212: OFF", and "Sensor 213: ON". As illustrated in Fig. 5, the information regarding the external signals may include characters, numbers, and a time chart.

For example, when a flaw with an unknown cause has occurred in the workpiece at the site where the robot 200 is used, it can be inferred that the cause is around the robot arm 201 used during the processing by analyzing the captured image illustrated in Fig. 4. The user can check whether or not the robot 200 is in motion by viewing the captured image illustrated in Fig. 4. "Sensor 211: OFF", "Sensor 212: OFF", and "Sensor 213: ON" have been added to the captured image illustrated in Fig. 4. Since "Sensor 213: ON" has been added to the captured image illustrated in Fig. 4, the user can grasp that the vibration value measured by the sensor 213 does not fall within the predetermined range. The user can consider that the vibration of the robot arm 201 is out of the expected range to be the cause of the flaw on the workpiece.

The user can grasp the states of the external signals output from the sensors 211 to 213 by viewing the moving image using the information processing apparatus 12 or the external display apparatus and checking the information regarding the external signals added to the captured image. Since the captured image and the external signals are synchronized with each other, the user can grasp the timing at which the states of the external signals output from the sensors 211 to 213 change. For example, the user can grasp the timing at which the external signal of the sensor 213 changes from OFF to ON. This makes it possible to grasp the status of the equipment at the manufacturing site, and to reduce the time required for investigating the cause and performing recovery work when a problem occurs.

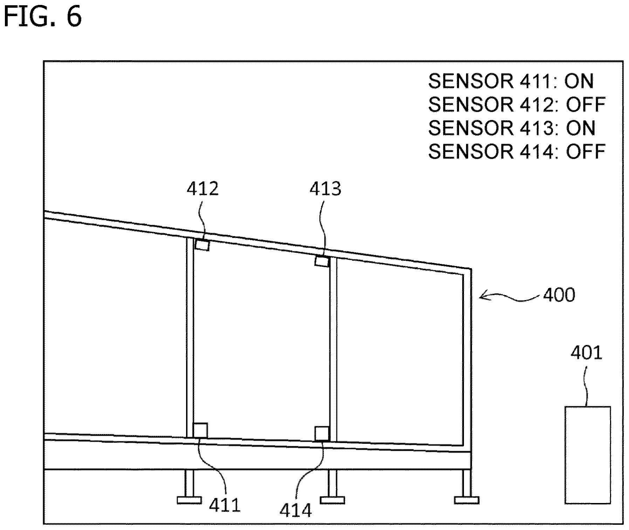

Fig. 6 is a diagram illustrating an example of the captured image. Fig. 6 illustrates a captured image when the inside of a clean room is imaged. A precision equipment 400 and a particle sensor 401 are installed in the clean room. The particle sensor 401 detects a particle count in the clean room. Sensors 411 to 414 are provided in the precision equipment 400. Here, the imaging device 11C is performing imaging, and sensors 411 to 414 are connected to the imaging device 11C.

The sensor 411 is a sensor that detects the opening and closing of the door of precision equipment 400. The sensor 411 is, for example, a proximity sensor. When the door of the precision equipment 400 is open, the sensor 411 outputs an ON signal as an external signal. When the door of the precision equipment 400 is closed, the sensor 411 outputs an OFF signal as an external signal.

The sensor 412 is a temperature sensor that measures the temperature in the precision equipment 400. When the temperature in the precision equipment 400 does not fall within a predetermined range, the sensor 412 outputs an ON signal as an external signal. When the temperature in the precision equipment 400 falls within the predetermined range, the sensor 412 outputs an OFF signal as an external signal.

The sensor 413 is a humidity sensor that measures humidity in the precision equipment 400. When the humidity in the precision equipment 400 does not fall within a predetermined range, the sensor 413 outputs an ON signal as an external signal. When the humidity in the precision equipment 400 falls within the predetermined range, the sensor 413 outputs an OFF signal as an external signal.

The sensor 414 is a vibration sensor that measures the vibration of the precision equipment 400. When the measured vibration value does not fall within a predetermined range, the sensor 414 outputs an ON signal as an external signal. When the measured vibration value falls within the predetermined range, the sensor 414 outputs the OFF signal as an external signal.

The imaging device 11C acquires the external signals output from the sensors 411 to 414. The imaging device 11C outputs a captured image and the external signals acquired from the sensors 411 to 414 in synchronization with each other. The information processing apparatus 12 acquires the captured image and the external signal outputs from the imaging device 11C. The information processing apparatus 12 generates information regarding the external signals, and adds information regarding the external signals to the captured image synchronized with the external signals. In the example of the captured image illustrated in Fig. 6, information regarding external signals is superimposed on a predetermined area of the captured image. The captured image to which the information regarding the external signals has been added is displayed on the display 126 of the information processing apparatus 12. Furthermore, the information processing apparatus 12 may transmit the captured image to which the information regarding the external signals has been added to an external display apparatus, and the external display apparatus may display the captured image to which the information regarding the external signal has been added.

For example, when the particle sensor 401 has detected a particle count equal to or greater than the threshold value, by analyzing the captured image illustrated in Fig. 6, it can be inferred that the cause of the increase in a particle count in the clean room is the precision equipment 400. "Sensor 411: ON", "Sensor 412: OFF", "Sensor 413: ON", and "Sensor 414: OFF" have been added to the captured image illustrated in Fig. 6. Since "Sensor 411: ON" and "Sensor 413: ON" have been added to the captured image illustrated in Fig. 6, the user can grasp that the door of the precision equipment 400 is open and the humidity in the precision equipment 400 does not fall within the predetermined range. In addition to the fact that the door of the precision equipment 400 is not closed, the user can consider that the humidity in the precision equipment 400 outside the predetermined range is the cause of the increase in a particle count in the clean room.

The user can grasp the states of the external signals output from the sensors 411 to 414 by viewing the moving image using the information processing apparatus 12 or the external display apparatus and checking the information regarding the external signals added to the captured image. Since the captured image and the external signal are synchronized with each other, the user can grasp the timing at which the state of each of the external signals output from the sensors 411 to 414 changes. For example, the user can grasp the timing at which the external signal of the sensor 411 changes from OFF to ON and the timing at which the external signal of the sensor 413 changes from OFF to ON. This makes it possible to grasp the status of the equipment at the manufacturing site, and to reduce the time required for investigating the cause and performing recovery work when a problem occurs.

Furthermore, each process described above may be regarded as an information processing method of the information processing system 1 or the like. Each process described above may be regarded as a method executed by a computer. A program for causing a computer to execute each process described above may be provided to the computer through a network or from a computer-readable recording medium or the like that holds data non-temporarily. Note that each of the above methods and processes can be combined with each other as much as possible to constitute the present invention.

### <Supplementary note>

An information processing system (1) including:
a signal output unit (10) that outputs an external signal;
an imaging unit (11) that acquires the external signal from the signal output unit (10) and synchronously output a captured image generated by imaging an object and the external signal; and
a creation unit (10, 124) that acquires the captured image and the external signal from the imaging unit (11), adds information regarding the external signal to the captured image synchronized with the external signal, and creates a moving image including a plurality of the captured images continuous in time series on the basis of the captured image to which the information regarding the external signal has been added.

### DESCRIPTION OF SYMBOLS

1 information processing system
10 (10 to 10J) signal output device
11 (11A to 11C) imaging device
12 information processing apparatus
121 acquisition unit
122 generator
123 adder
124 creation unit
125 storage
126 display
127 operation unit

## Claims

1. An information processing system comprising:
a signal output unit configured to output an external signal;
an imaging unit configured to acquire the external signal from the signal output unit and synchronously output a captured image generated by imaging an object and the external signal; and
a creation unit configured to acquire the captured image and the external signal from the imaging unit, add information regarding the external signal to the captured image synchronized with the external signal, and create a moving image including a plurality of the captured images continuous in time series on a basis of the captured image to which the information regarding the external signal has been added.

2. The information processing system according to claim 1, wherein
the signal output unit is one of a plurality of the signal output units,
the imaging unit acquires the external signal from each of the plurality of signal output units and outputs the captured image and a plurality of the external signals in synchronization with each other, and
the creation unit acquires the captured image and the plurality of external signals from the imaging unit, adds information regarding the plurality of external signals to the captured image synchronized with the plurality of external signals, and creates a moving image including a plurality of the captured images continuous in time series on a basis of the captured image to which the information regarding the plurality of external signals has been added.

3. The information processing system according to claim 1, wherein
the signal output unit is one of a plurality of the signal output units,
the imaging unit is one of a plurality of the imaging units,
the plurality of imaging units each acquires the external signals from the signal output units connected to each of the imaging units, and outputs the captured image and the external signals in synchronization with each other, and
the creation unit acquires the captured image and the external signals from each of the plurality of imaging units, adds information regarding the external signals output from the plurality of signal output units to the captured image synchronized with the external signals output from one of the plurality of signal output units, and creates a moving image including a plurality of the captured images continuous in time series on a basis of the captured image to which the information regarding the plurality of external signals has been added.

4. The information processing system according to claim 1, wherein
the signal output unit is one of a plurality of the signal output units,
the imaging unit is one of a plurality of the imaging units,
the plurality of imaging units each acquires the external signals from the plurality of signal output units connected to each of the imaging units, and outputs the captured image and the plurality of external signals in synchronization with each other, and
the creation unit acquires the captured image and the plurality of external signals from each of the plurality of imaging units, adds information regarding the external signals output from the plurality of signal output units to the captured image synchronized with the external signals output from one of the plurality of signal output units, and creates a moving image including a plurality of the captured images continuous in time series on a basis of the captured image to which the information regarding the plurality of external signals has been added.

5. The information processing system according to claim 1, wherein the signal output unit is a sensor or a PLC.

6. The information processing system according to any one of claims 2 to 4, wherein
at least one of the plurality of signal output units is a sensor, and
at least one of the plurality of signal output units is a PLC.

7. The information processing system according to any one of claims 1 to 6, wherein the information regarding the external signal includes at least one of a letter, a number, a symbol, a character string, a number string, a graph, a time chart, and an icon.
